# EUROPÄISCHE PATENTSCHRIFT

(11) **EP 0 805 607 B1**
(45) Veröffentlichungstag und Bekanntmachung des Hinweises auf die Patenterteilung: **21.07.2010**
(21) Anmeldenummer: 97250137.3
(22) Anmeldetag: 22.04.1997
(51) Int. Cl.: H04W 8/20

(54) **Verfahren zum Zugriff auf zumindest einen Teil der Daten einer Mikroprozessorkarte**
Method for accessing at least a part of the data of a microprocessor card
Méthode d'accès d'au moins une partie des données d'une carte à microprocesseur

(30) Priorität: 29.04.1996 DE 19617943
(43) Veröffentlichungstag der Anmeldung: 05.11.1997
(73) Patentinhaber: Vodafone Holding GmbH, 40213 Düsseldorf (DE)
(72) Erfinder: Brögger, Roswitha, Dipl.-Ing., 41747 Viersen (DE); Jungemann, Matthias, Dipl.-Ing., 52064 Aachen (DE); Maringer, Günter, Dr.rer.nat., 53115 Bonn (DE)
(74) Vertreter: Jostarndt, Hans-Dieter

(56) Entgegenhaltungen:
- EP-A- 0 607 767
- EP-A- 0 654 919
- US-A- 4 544 833
- US-A- 5 191 608
- US-A- 5 379 344
- MARTINEAU P ET AL: "SMART CARD FOR SUBSCRIPTION" PROCEEDINGS OF THE NORDIC SEMINAR ON DIGITAL MOBILE RADIO COMMUNICATIONS, HELSINKI, DEC. 1 - 3, 1992, Nr. SEMINAR 5, 1. Dezember 1992, Seiten 73-81, XP000457838 TELECOM FINLAND

## Beschreibung

Die Erfindung betrifft ein Verfahren zum Zugang auf zumindest einen Teil der Daten einer Mikroprozessorkarte für Telephongeräte, insbesondere SIM-Karten für Mobilfunkgeräte, mit mindestens einer zugänglichen Kartennummer.

Derartige SIM-Karten (SIM = Subscriber Identity Module) sind beispielsweise aus der EP 0 607 767 A1 bekannt. Sie enthalten einen PIN-Code (PIN = Personal Identity Number), der für einen Zugriff auf das Mobilfunknetz vom Teilnehmer eingegeben werden muß. Anhand der PIN wird von der SIM-Karte geprüft, ob eine Zugangsberechtigung vorliegt. Bei Vorliegen der Berechtigung wird dem Mobilfunkgerät der Zugang zu speziellen Daten der SIM-Karte freigegeben, mit denen das Mobilfunkgerät den Teilnehmer beim Netzbetreiber anmeldet. Auf diese Weise wird erreicht, daß nur der Berechtigte mit seiner SIM-Karte telefonieren kann.

Auf der SIM-Karte ist zusätzlich ein sogenannter IMSI-Code (International Mobile Subscriber Identity) gespeichert. Beschrieben wird in der EP 0 607 767 A1 eine Zuordnung (Personalisierung) eines Mobilfunkgerätes zu einer SIM-Karte über einen Vergleich mit dem IMSI-Code. Dabei ist im Mobilfunkgerät eine Liste mit IMSI-Codes hinterlegt, die zur Aktivierung des Mobilfunkgerätes mit der IMSI der SIM-Karte verglichen wird. Bei Übereinstimmung erfolgt die Zuordnung.

Ein Lesezugriff auf SIM-Karten zur Qualitätskontrolle und eine Konfiguration der SIM-Karten in Verkaufsstellen von authorisierten Partnerunternehmen, d.h. durch die unterschiedlichen Vertriebsstellen, ist bisher nicht vorgesehen.

Die US 5,379,344 offenbart ein Verfahren zur Validierung einer Chipkarte. Hierbei werden zunächst die Seriennummer der Karte und ein Zertifikat ausgelesen und verschlüsselt, und das Resultat wird als Nutzerschlüssel an die Chipkarte gesendet. Dann können Daten aus einem geschützten Speicher der Chipkarte ausgelesen werden. Die Daten werden verschlüsselt und mit dem zuvor gelesenen Zertifikat verglichen. Bei Übereinstimmung wird der Zugriff auf die Karte ermöglicht, um eine Transaktion vorzunehmen. Die Chipkarte kann so als Ersatz für Geld verwendet werden.

Aus der US 5,191,608 geht ein Verfahren zur Verwaltung einer Applikation einer Mikroprozessorkarte hervor. Zum Schutz einer Applikation wird eine Signatur der Applikation (extern) anhand eines geheimen Codes der Karte erzeugt und in der Karte gespeichert. Bei Verwendung der Karte, insbesondere dann, wenn sie in ein Lesegerät eingesetzt wird, berechnet die Karte die Signatur der Applikation neu und vergleicht sie mit der gespeicherten Signatur.

Die Aufgabe der Erfindung besteht in einer Eröffnung des Zugangs zu mindestens einem Teil der Daten von Mikroprozessorkarten, insbesondere SIM-Karten für Mobilfunkgeräte.

Die Aufgabe wird erfindungsgemäss dadurch gelöst, dass aus der Kartennummer und einem Schlüssel mittels eines Verschlüsselungs-Algorithmus eine Identifikations-Nummer (ADMc) berechnet, der Mikroprozessorkarte übergeben und mit einer auf der Mikroprozessorkarte gespeicherten, in gleicher Weise generierten Identifikations-Nummer (ADM) verglichen wird und dass der Zugang durch die Mikroprozessorkarte bei Gleichheit freigegeben wird.

Dadurch besteht die Möglichkeit des abgesicherten Zugangs zu den Daten einer Mikroprozessorkarte, wie z.B. einer SIM-Karte, d.h. die Karte kann anschliessend gelesen und/oder beschrieben werden. Die sehr hohe Sicherheit, dass kein Unbefugter Zugriff erhält, wird hierbei durch die vorgeschlagenen Verfahrensschritte sichergestellt.

Die Handhabbarkeit des Verfahrens lässt sich dadurch wesentlich verbessern, dass der Verschlüsselungs-Algorithmus und zumindest ein Schlüssel auf einer mit einem Mikroprozessor versehenen Karte, einer sogenannten Mastercard, gespeichert ist.

Zweckmässigerweise wird die Mastercard in Verbindung mit mindestens einem Schreib-/Lesegerät für Mikroprozessorkarten verwendet Zur Automatisierung von Prüfverfahren wird vorgeschlagen, dass Zugang durch einen Computer gesteuert wird, so dass die Prüfung der Daten der SIM-Karte auch selbsttätig erfolgen kann.

Zur Priorisierung verschiedener Anwender hinsichtlich des Zugangs zu den Daten wird jeweils ein Schlüssel für einen nur diesem Schlüssel zugeordneten Teil der Daten verwendet.

Zur weiteren Erhöhung der Sicherheit werden der oder die Schlüssel mittels eines Zufallsgenerators erzeugt, der oder die Schlüssel sind damit durch eine unbefugte Person nicht mehr nachvollziehbar.

Ein Ausführungsbeispiel des erfindungsgemäßen Verfahrens wird anhand der Zeichnung nachstehend erläutert. Es zeigen:
- Fig. 1: eine Mastercard,
- Fig. 2: den Aufbau der Mastercard gemäß Fig. 1,
- Fig. 3 u. 4: den Personalisierungsvorgang einer SIM-Karte durch den SIM- Kartenhersteller und
- Fig. 5: den Einsatz der Mastercard zur Eröffnung des Zugangs zu den Daten einer SIM-Karte gemäß Fig. 4.

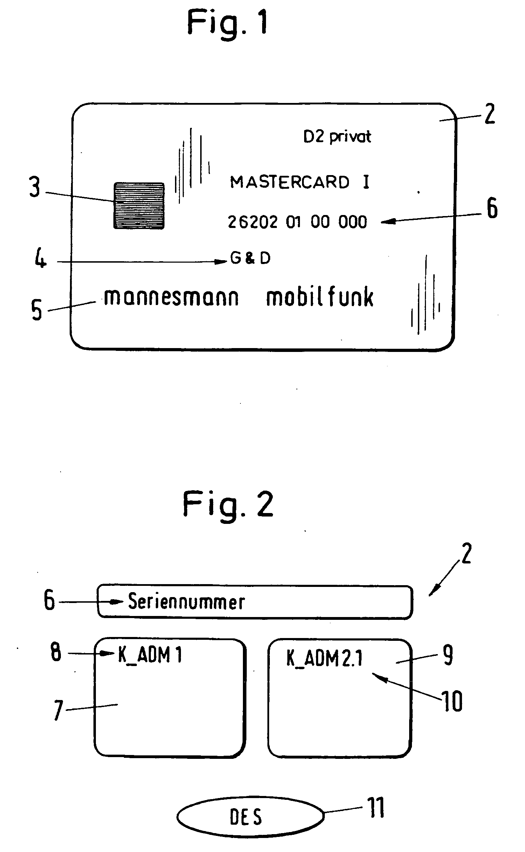

Zur Durchführung des Verfahrens zum Zugang auf zumindest einen Teil der Daten 1b einer als SIM-Karte 1a ausgebildeten Mikroprozessorkarte 1 wird eine spezielle Karte, eine Mastercard 2, verwendet, wie sie in der Fig. 1 dargestellt ist. Diese umfaßt einen Mikroprozessor 3, der als schwarzes Feld gezeichnet ist. Weiter sind auf der Mastercard 2 der Anwendername 4 und der Systembetreiber 5 angegeben.

Fig. 2 zeigt schematisch eine mögliche innere Struktur der Mastercard 2. Diese enthält drei Datenfelder: ein Datenfeld mit der Seriennummer 6, eine Tabelle 7 als Datenfeld mit Schlüsseln 8 und eine Tabelle 9 mit Schlüsseln 10. Die Schlüssel 8, 10 sind jeweils mehrstellige Zahlen, welche aus Sicherheitsgründen mittels eines Zufallsgenerators erzeugt wurden. Hierbei ist es auch möglich, daß nur ein einziger der Schlüssel 8 oder der Schlüssel 10 auf einer Mastercard 2 abgespeichert sind. Weiter ist auf der Mastercard 2 ein Verschlüsselungsalgorithmus 11 gespeichert, beispielsweise das bekannte standardisierte Verschlüsselungsverfahren DES (Data Encryption Standard).

SIM-Karten 1a werden für das Betreiben von Mobilfunkgeräten eines nach dem GSM-Standard arbeitenden Mobilfunknetzes verwendet. Jede SIM-Karte 1a weist üblicherweise eine persönliche Identifikations-Nummer (PIN) auf, die vom Nutzer des Mobilfunkgerätes jederzeit beliebig oft verändert werden kann. Weiter verfügt jede SIM-Karte 1a über eine Seriennummer 12a als spezielle Kartennummer 12, die üblicherweise frei zugänglich und mit einem Kartenlesegerät lesbar ist. Selbstverständlich können auch noch andere frei zugängliche Kartennummern 12 auf der SIM-Karte 1a gespeichert sein. Daneben sind auf der SIM-Karte 1a in der Regel noch eine Vielzahl von Daten 1b abgelegt, beispielsweise netzspezifische Daten für den Netzzugriff, Benutzerdaten (z.B. Short Messages, Kurzwahlrufnummern) und so weiter. Die Verwaltung der Daten 1b erfolgt durch einen auf der SIM-Karte 1a ebenfalls untergebrachten Mikroprozessor 1c.

Bei Eingabe der korrekten Identifikations-Nummer (PIN) wird nach erfolgreicher Prüfung der Zugang zum entsprechenden Mobilfunknetz gewährt.

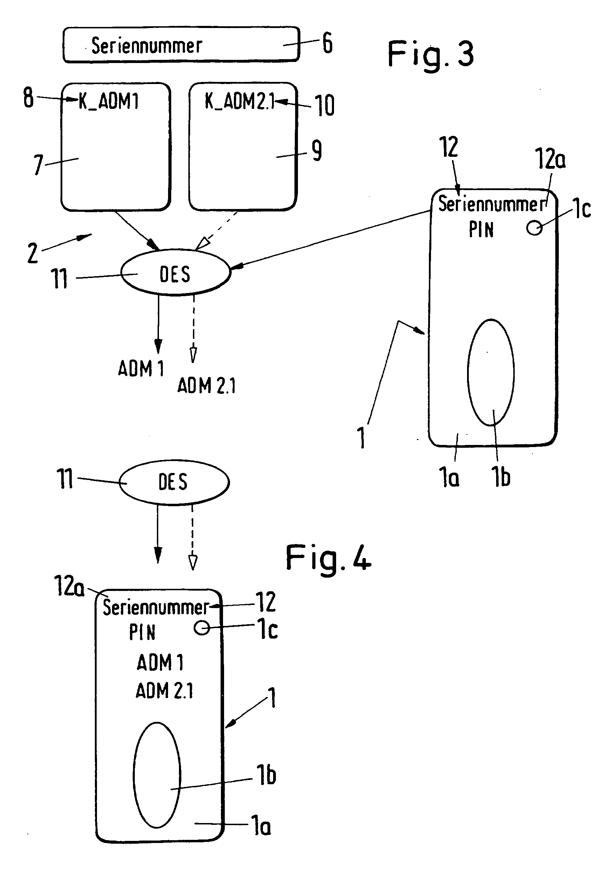

Fig. 3 und 4 zeigen die Personalisierung der SIM-Karte 1a z.B. durch den Kartenhersteller, also die Vorbereitung der SIM-Karte 1a für das oben beschriebene Zugangsverfahren. Der Kartenhersteller erhält dazu vom Mobilfunkunternehmen eine Mastercard 2, auf der die Schlüssel 8 und 10 und der Verschlüsselungs-Algorithmus 11 gespeichert sind. Anhand der Seriennummer 12a der SIM-Karte 1a und des Schlüssels 8 und 10 werden dann jeweils die beiden Identifikations-Nummern ADM1 und ADM2.1 berechnet und auf der SIM-Karte 1a abgespeichert. Zweckmäßigerweise sind jeder Identifikations-Nummer (allgemein ADM) ein Teil der Daten 1b (ADM2.1) oder alle Daten 1b (ADM1) eindeutig zugeordnet; die Zuordnung wird bei der Kartenherstellung ebenfalls auf der SIM-Karte 1a softwaremäßig gespeichert.

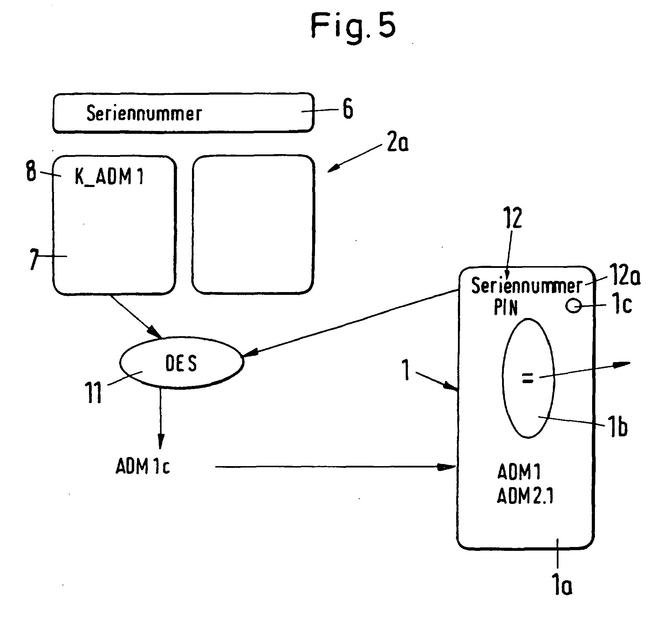

Ein Zugang auf die Daten 1b der SIM-Karte 1a ist nur nach Freigabe durch den Mikroprozessor 1c möglich. Nachfolgend werden anhand der Fig. 5 die einzelnen Schritte des Verfahrens zur Freischaltung einer SIM-Karte 1 a zum Zugang auf \ zumindest einen Teil ihrer Daten 1b beschrieben, bei der eine Mastercard 2a mit nur einem abgespeicherten Schlüssel (nämlich k_ ADM1) zur Anwendung kommt, die z.B. einem autorisierten Partnerunternehmen mit eingeschränkter Zugriffsmöglichkeit zur Verfügung gestellt wurde. Die Schritte können hierbei auch selbsttätig z.B. mittels eines Computers ausgeführt werden, d.h. das Verfahren ist automatisch durchführbar. Um Zugang zu den Daten 1b der Mikroprozessorkarte 1 zu erhalten, beispielsweise um einen Teil der Daten 1b der Mikroprozessorkarte 1 zu lesen oder neu zu schreiben, wird ein bekanntes Schreib-/Lesegerät (nicht gezeigt) verwendet, in das die SIM-Karte 1a und eine Mastercard 2a eingeführt werden. Das Schreib-/Lesegerät liest die Seriennummer 12a der SIM-Karte 1a und von der Mastercard 2a den einzigen Schlüssel 6, K_ADM1, und berechnet mit Hilfe des auf der Mastercard 2 abgespeicherten Verschlüsselungs-Algorithmus 11 eine Identifikations-Nummer ADM1c (c steht für calculated) und übergibt diese der SIM-Karte 1a (s. Fig. 5). Der Mikroprozessor 1c vergleicht diese Identifikations-NummerADM1c mit der in gleicherweise bei der Herstellung generierten und auf der SIM-Karte 1a abgelegten Identifikations-Nummer ADM1. Bei Gleichheit dieser beiden Identifikations-Nummern ADM1 = ADM1c wird der Zugang zu einem Teil der Daten 1b der SIM-Karte 1a durch den Mikroprozessor 1c freigegeben.

Der Schlüssel 8 (K_ADM1) ermöglicht den Zugriff zu den nur diesem Schlüssel K ADM1 und (damit zu der daraus berechneten Identifikations-Nummer ADM1) zugeordneten Daten 1b.

Mit einer Mastercard mit einem anderen abgespeicherten Schlüssel als K_ADM1, also beispielsweise mit dem Schlüssel 10, k_ADM2.1, kann man folglich nur die diesem Schlüssel zugeordneten Daten 1 b freischalten. Durch dieses Verfahren wird die Priorisierung einzelner Anwender, z.B. einzelner Partnerunternehmen, über verschiedene Schlüssel 8 oder 10 ermöglicht.

Anschließend können nur die freigegebenen Daten 1b auf der SIM-Karte 1a gelesen und/oder geändert werden.

Anders als die vom Nutzer änderbare, auf jeder Mikroprozessorkarte 1 vorhandene Identifikations-Nummer (PIN), sind die Identifikations-Nummern (ADM) vom Zugreifenden generell nicht änderbar.

Das beschriebene Verfahren kann weiter bei defekten SIM-Karten 1a, deren Störungen durch Gerätefehler oder Benutzerfehler oder andere Fehler entstanden sind, angewendet werden. Nach Zugang auf die SIM-Karte 1a können die entsprechenden Software-Fehler analysiert, erkannt und wenn möglich oder gewünscht auch behoben werden.

### Bezugszeichenliste

- 1: Mikroprozessorkarte
- 1a: SIM-Karte
- 1 b: Daten
- 1c: Mikroprozessor
- 2: Mastercard
- 2a: Mastercard mit nur einem Schlüssel
- 3: Mikroprozessor
- 4: Anwender
- 5: Systembetreiber
- 6: Seriennummer der Mastercard
- 7: Tabelle
- 8: Schlüssel (ADM1-Key)
- 9: Tabelle
- 10: Schlüssel (ADM2-Key)
- 11: Verschlüsselungs-Algorithmus (DES -Data Inscryption Standard)
- 12: Kartennummer
- 12a: Seriennummer der SIM-Karte
- ADM: Identifikations-Nummer
- ADM1: eine spezielle Identifikations-Nummer
- ADMc: berechnete Identifikations-Nummer
- ADM1c: eine spezielle berechnete Identifikations-Nummer
- PIN: persönliche Identifikations-Nummer

## Patentansprüche

1. Verfahren zum Zugang auf zumindest einen Teil der Daten einer Mikroprozessorkarte für Telephongeräte, insbesondere SIM-Karten für Mobllfunkgeräte, mit mindestens einer zugänglichen Kartennummer, **dadurch gekennzeichnet, dass** aus der Kartennummer und einem Schlüssel (8, 10) mittels eines Verschlüsselungs-Algorithmus (11) eine Identifikations-Nummer (ADMc) berechnet, der Mikroprozessorkarte (1) übergeben und mit einer auf der Mikroprozessorkarte (1) gespeicherten, in gleicher Weise generierten Identifikations-Nummer (ADM) verglichen wird und dass der Zugang durch die Mikroprozessorkarte (1) bei Gleichheit freigegeben wird, woraufhin die Mikroprozessorkarte gelesen und beschrieben werden kann.

2. Verfahren nach Anspruch 1, **dadurch gekennzeichnet, dass** der Verschlüsselungs-Algorithmus (11) und zumindest ein Schlüssel (8, 10) auf einer mit einem Mikroprozessor (3) versehenen Mastercard (2) gespeichert ist.

3. Verfahren nach Anspruch 2, **dadurch gekennzeichnet, dass** die Mastercard (2) in Verbindung mit mindestens einem Schreib-/Lesegerät für Mikroprozessorkarten (1) verwendet wird.

4. Verfahren nach einem der Ansprüche 1 bis 3, **dadurch gekennzeichnet, dass** Zugang durch einen Computer gesteuert wird.

5. Verfahren nach Anspruch 4, **dadurch gekennzeichnet, dass** die Prüfung der Daten (1b) der SIM-Karte (1a) selbsttätig erfolgt.

6. Verfahren nach einem der Ansprüche 1 bis 5, **dadurch gekennzeichnet, dass** jeweils ein Schlüssel (8, 10) für einen diesem Schlüssel (8, 10) zugeordneten Teil der Daten verwendet wird.

7. Verfahren nach einem der Ansprüche 1 bis 6, **dadurch gekennzeichnet, dass** der Schlüssel (8, 10) mittels eines Zufallsgenerators erzeugt wird.

## Claims

1. A method for accessing at least part of the data on a microprocessor card for telephone devices, particularly SIM cards for mobile radio devices, using at least one accessible card number, **characterized in that**, on the basis of the card number and on the basis of a key (8, 10), an identification number (ADMc) is calculated by means of an encryption algorithm (11), transmitted to the microprocessor card (1) and compared to an identification number (ADM) that is stored on the microprocessor card (1) and that was generated in the same manner, and **in that**, if these are identical, access is permitted by the microprocessor card (1), after which the microprocessor card can be read and written.

2. The method according to Claim 1, **characterized in that** the encryption algorithm (11) and at least one key (8, 10) are stored on a master card (2) provided with a microprocessor (3).

3. The method according to Claim 2, **characterized in that** the master card (2) is used in conjunction with at least one read/write device for microprocessor cards (1).

4. The method according to one of Claims 1 to 3, **characterized in that** access is controlled by a computer.

5. The method according to Claim 4, **characterized in that** the data (1b) on the SIM card (1a) is checked automatically.

6. The method according to one of Claims 1 to 5, **characterized in that**, in each case, a key (8, 10) is used for the part of the data associated with this key (8, 10).

7. The method according to one of Claims 1 to 6, **characterized in that** the key (8, 10) is generated by means of a random generator.

## Revendications

1. Procédé d'accès à au moins une partie des données d'une carte à microprocesseur pour appareils téléphoniques, en particulier des cartes SIM pour appareils radio mobiles, avec au moins un numéro de carte accessible, **caractérisé en ce qu'**un numéro d'identification (ADMc) est calculé à partir du numéro de carte et d'une clé (8, 10) au moyen d'un algorithme de cryptage (11), est transféré à la carte à microprocesseur (1) et est comparé avec un numéro d'identification (ADM) stocké sur la carte à microprocesseur (1) et généré de la même manière et **en ce que** l'accès est autorisé par la carte à microprocesseur (1) en cas d'identité, suite à quoi il est possible de lire et d'écrire la carte à microprocesseur.

2. Procédé selon la revendication 1, **caractérisé en ce que** l'algorithme de cryptage (11) et au moins une clé (8, 10) sont stockés sur une carte maître (2) pourvue d'un microprocesseur (3).

3. Procédé selon la revendication 2, **caractérisé en ce que** la carte maître (2) est utilisée conjointement avec au moins un appareil de lecture/écriture pour cartes à microprocesseur (1).

4. Procédé selon l'une des revendications 1 à 3, **caractérisé en ce que** l'accès est commandé par un ordinateur.

5. Procédé selon la revendication 4, **caractérisé en ce que** le contrôle des données (1b) de la carte SIM (1 a) se fait automatiquement.

6. Procédé selon l'une des revendications 1 à 5, **caractérisé en ce que** respectivement une clé (8, 10) est utilisée pour une partie des données associée à cette clé (8, 10).

7. Procédé selon l'une des revendications 1 à 6, **caractérisé en ce que** la clé (8, 10) est générée au moyen d'un générateur aléatoire.
